# EUROPEAN PATENT APPLICATION

(11) **EP 4 015 557 A1**
(43) Date of publication of application: **22.06.2022**
(21) Application number: 20215950.5
(22) Date of filing: 21.12.2020
(51) Int. Cl.: C08G 59/17, C08G 59/50, C09J 163/00, C09J 163/10

(54) **TWO COMPONENT (2K) EPOXY FORMULATION**

(71) Applicant: Henkel AG & Co. KGaA, 40589 Düsseldorf (DE)
(72) Inventor: Chen, Chunfu, Kanagawa Prefecture, 211-0067 (JP)

(57) **Abstract**

The present invention is directed to a two-component (2K) curable composition comprising:
a first component comprising, based on the weight of the component:
from 80 to 100 wt.% of a) i) at least one partially (meth)acrylated epoxy resin; and,
from 0 to 20 wt.% of a) ii) at least one epoxy resin distinct from said resin a) i); and,

a second component comprising b) at least one polyamine having at least two amine hydrogens reactive toward epoxide groups,
wherein said curable composition is characterized by a ratio of the amine hydrogen equivalent of said at least one polyamine (b) to the total equivalents of epoxy groups and acrylate groups of said first component (a) of from 0.5: 1 to 1.05: 1.

## Description

### TECHNICAL FIELD

The present invention relates to a two-component (2K) curable composition based on a partially (meth)acrylated epoxy resin. More particularly, the present invention is directed to a two-component (2K) curable composition having a fast gel time and which is characterized by containing a partially (meth)acrylated epoxy resin in a first component and an amine functional hardener or curative in a second component.

### TECHNICAL BACKGROUND

Epoxy resins have found a broad range of application, predominantly on the basis that a particular selection of resin, modifier and cross-linking agent (or curative) can allow the properties of the cured epoxy resin to be tailored to achieve specific performance characteristics.

That versatility being acknowledged, properly cured epoxy resins also possess a plurality of other attributes including *inter alia*: excellent chemical resistance, particularly to alkaline environments; high tensile and compressive strengths; high fatigue strength; low shrinkage upon cure; ability to cure over a range of temperatures; and, electrical insulation properties and retention thereof upon aging or environmental exposure.

In certain situations it might be beneficial to use epoxy resins to attain the aforementioned advantages, but it may be difficult to do so in practice because the known epoxy resin systems do not gelate - that is transition from a liquid-like to a solid-like behavior - sufficiently rapidly. For instance, rapid gelation would be required where the epoxy resin system is to be deposited on a vertical substrate or on the underside of a horizontal substrate, otherwise the resin system would simply drip or run off from the substrate surface before it can cure sufficiently to bear its own weight. Equally, in additive manufacturing processes, which are based on layer-by-layer deposition of a curable composition onto a substrate, gelation must be sufficiently fast to prevent the collapse of the laminar structure obtained after deposition.

In such circumstances, the gel time of the curable composition might be reduced by elevating the temperature of the epoxy resin system and / or the substrate. However, it may not always be practical to apply either heat *per se* or the high temperatures required to attain a sufficiently short gel time. As such, the present inventor is concerned with reducing gel time through the selection of particular epoxy resin(s) and hardeners or curatives which can react rapidly at low temperature.

For such curable compositions, gelation is considered to be an inhomogeneous process. As polymerization proceeds, microgels may be obtained in the form of crosslinked polymer coils swollen by un-reacted monomers. The dimensions and concentration of these polymer coils increase until the growing molecule reaches a mass large enough to interconnect every boundary of the system: this is termed macro-gelation. Certain authors have already presented curable compositions which are purported to possess a cure schedule characterized by a short gelation time.

EP 0 502 611 A2 (Morton International Incorporated) describes a two-component (2K) curable epoxy composition comprising, by weight: (a) 100 parts of an epoxy group-containing resin having an epoxy functionality of 2 or higher; (b) from 1 to 100 parts of a Lewis base curative for said epoxy group-containing resin; (c) from 10 to 100 parts of a component having an acrylate functionality of 2 or higher; and, (d) from 5 to 100 parts of a component having a mercaptan functionality of 2 or higher, said components (c) and (d) having the sum of an acrylate functionality plus a mercaptan functionality of at least 4.5, and said components (c) and (d) in the presence of said Lewis base (b) rapidly gelling prior to substantial cure of said component (a) in the presence of said Lewis base (b). In that composition, components (a) and (c) are packaged together and said components (b) and (d) are packaged together.

US 2017/369635 (Colson et al.) discloses a two-component (2K) epoxy resin system comprising: in a first component a1) an epoxy resin having an average of 1.8 to 6 epoxy groups per molecule and an epoxy equivalent weight of 150 to 300; a2) from 3 to 20 parts by weight, per 100 parts by weight of component a1) of a polyacrylate having an average of 2 to 8 acrylate groups per molecule and an equivalent weight per acrylate group of 80 to 250; and, a3) 0 to 10 parts by weight, per 100 parts by weight of component a1), of a polymethacrylate having an average of 2 to 8 methacrylate groups per molecule and an equivalent weight per methacrylate group of 95 to 265; and, in a second component, b1) an amine curing agent having an average of 2 to 8 amine hydrogens per molecule and an amine hydrogen equivalent weight of 15 to 100; and, b2) a thiol curing agent having an average of 2 to 8 thiol groups per molecule and an equivalent weight per thiol group of 50 to 300.

Both the aforementioned documents present complex formulations. There is considered to be a need in the art to prepare alternative, ideally less complex, curable compositions which are based on epoxy resins and which exhibit a short cure time but of which the cured product is not compromised as regards its physicochemical properties.

### STATEMENT OF THE INVENTION

In accordance with a first aspect of the invention there is provided a two-component (2K) curable composition comprising:
a first component comprising, based on the weight of the component:
   from 80 to 100 wt.%, preferably from 90 to 100 wt.% of a) i) at least one partially (meth)acrylated epoxy resin; and,
   from 0 to 20 wt.%, preferably from 0 to 10 wt.% of a) ii) at least one epoxy resin distinct from said resin a) i); and,
a second component comprising b) at least one polyamine having at least two amine hydrogens reactive toward epoxide groups,
wherein said curable composition is characterized by a ratio of the amine hydrogen equivalent of said at least one polyamine (b) to the total equivalents of epoxy groups and acrylate groups of said first component (a) of from 0.5: 1 to 1.05: 1, preferably from 0.8: 1 to 1.0: 1.

A curable composition as defined herein can achieve a gel time of less than 10 minutes, for example of less than 5 minutes, as determined at 25°C.

In an embodiment, the ratio of epoxide groups to (meth)acrylate groups in the or each partially (meth)acrylated epoxy resin a) i) is from 1:1 to 1:3, for example from 1:1 to 1:2. Additionally or alternatively, the or each partially (meth)acrylated epoxy resin a) i) should be a liquid having a viscosity in the range from 1000 to 1000000 centipoise (cps) for example from 2500 to 750000 cps as determined at 25°C.

It is preferred that part a) i) of the composition comprises at least one partially (meth)acrylated epoxy resin, wherein said epoxy resin is selected from diepoxide compounds having epoxide equivalent weights of less than 500 g/eq. In particular, fast gel times have been attained when said part a) i) comprises at least one partially (meth)acrylated epoxy resin, wherein said epoxy resin is selected from the group consisting of: bisphenol A based diglycidylethers; hydrogenated bisphenol A based diglycidylethers; bisphenol-A epichlorohydrin based epoxy resins; bisphenol F diglycidyl ethers; and, hydrogenated bisphenol F based diglycidylethers.

In accordance with a second aspect of the invention, there is provided a cured product obtained from the two component (2K) curable composition as defined herein above and in the appended claims. The present invention also provides for the use of that cured reaction product as a coating, adhesive or sealant.

### DEFINITIONS

As used herein, the singular forms "*a*"*,* "*an*" and "*the*" include plural referents unless the context clearly dictates otherwise.

The terms "*comprising*"*,* "*comprises*" and "*comprised* of" as used herein are synonymous with "*including*"*,* "*includes*"*,* "*containing*" or "*contains*"*,* and are inclusive or open-ended and do not exclude additional, non-recited members, elements or method steps. If used, the phrase "*consisting of*" is closed and excludes all additional elements. Further, the phrase "*consisting essentially of* excludes additional material elements but allows the inclusion of non-material elements that do not substantially change the nature of the invention.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "*from 0 to* x" specifically includes 0 wt.%: the ingredient defined by said range may be absent from the composition or may be present in the composition in an amount up to and including x wt.%. Equally, a weight range represented as being from "y *to 100 wt.%*" specifically includes 100 wt.%: the ingredient defined by that range may be the only ingredient present.

The words "*preferred*"*,* "*preferably*"*,* "*desirably*" and "*particularly*"*,* and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "*may*" is used in a permissive sense - that is meaning to have the potential to - rather than in the mandatory sense.

As used herein, room temperature is 23°C plus or minus 2°C. As used herein, "*ambient conditions*" means the temperature and pressure of the surroundings in which the composition is located or in which a coating layer or the substrate of said coating layer is located.

As used herein, the term "*equivalent (eq.*"*)* relates, as is usual in chemical notation, to the relative number of reactive groups present in the reaction.

The term "*equivalent weight*" as used herein refers to the molecular weight divided by the number of a function concerned. As such, "*epoxy equivalent weight*" (EEW) means the weight of resin, in grams, that contains one equivalent of epoxy. Equally, the "*amine hydrogen equivalent weight*" (AHEW) is the weight of the organic amine, in grams, that contains one amine hydrogen.

The term "*monofunctional*"*,* as used herein, refers to having one polymerizable moiety. The term "*polyfunctional*"*,* as used herein, refers to having more than one polymerizable moiety.

As used herein, the term "*epoxide*" denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated pre-polymers. The term "*monoepoxide compound*" is meant to denote epoxide compounds having one epoxy group. The term "*polyepoxide compound*" is meant to denote epoxide compounds having at least two epoxy groups. The term "*diepoxide compound*" is meant to denote epoxide compounds having two epoxy groups.

The epoxide may be unsubstituted but may also be inertly substituted. Exemplary inert substituents include chlorine, bromine, fluorine and phenyl.

As used herein, "*(meth)acryl*" is a shorthand term referring to "*aeryl*" and/or "*methacryl*"*.* Thus the term "*(meth)acrylate*" refers collectively to acrylate and methacrylate.

As used herein, "*C₁*-*Cₙ alkyl*" group refers to a monovalent group that contains 1 to n carbons atoms, that is a radical of an alkane and includes straight-chain and branched organic groups. As such, a "*C₁-C₈ alkyl*" group refers to a monovalent group that contains from 1 to 8 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more substituents selected from halogen, hydroxy, nitrile (-CN), amido and amino (-NH₂). Where applicable, a preference for a given substituent will be noted in the specification.

The term "*C₃-C₃₀ cycloalkyl*" is understood to mean an optionally substituted, saturated, mono-, bi- or tricyclic hydrocarbon group having from 3 to 30 carbon atoms. In general, a preference for cycloalkyl groups containing from 3-10 carbon atoms (C₃-C₁₈ cycloalkyl groups) should be noted. Examples of cycloalkyl groups include: cyclopropyl; cyclobutyl; cyclopentyl; cyclohexyl; cycloheptyl; cyclooctyl; adamantane; and, norbornane. In the present invention, such cycloalkyl groups may be unsubstituted or may be substituted with one or more substituents selected from halogen, C₁-C₆ alkyl and C₁-C₆ alkoxy.

As used herein, an "*C₆-C₁₈ aryl*" group used alone or as part of a larger moiety - as in "*aralkyl group*" - refers to optionally substituted, monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present invention, such aryl groups may be unsubstituted or may be substituted with one or more substituents selected from halogen, C₁-C₆ alkyl and C₁-C₆ alkoxy. Exemplary aryl groups include: phenyl; (C₁-C₄)alkoxyphenyl, such as methoxyphenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl. And a preference for phenyl groups may be noted.

As used herein, "*C₂-C₁₂ alkenyl*" refers to hydrocarbyl groups having from 2 to 12 carbon atoms and at least one unit of ethylenic unsaturation. The alkenyl group can be straight chained, branched or cyclic and may optionally be substituted. The term "*alkenyl*" also encompasses radicals having "*cis*" and "*trans*" configurations, or alternatively, "E" and "Z" configurations, as appreciated by those of ordinary skill in the art. In general, however, a preference for unsubstituted alkenyl groups containing from 2 to 10 (C₂₋₁₀) or 2 to 8 (C₂₋₈) carbon atoms should be noted. Examples of said C₂₋C₁₂ alkenyl groups include, but are not limited to: -CH=CH₂; -CH=CHCH₃; -CH₂CH=CH₂; -C(=CH₂)(CH₃); -CH=CHCH₂CH₃; -CH₂CH=CHCH₃; -CH₂CH₂CH=CH₂; -CH=C(CH₃)₂; -CH₂C(=CH₂)(CH₃); -C(=CH₂)CH₂CH₃; -C(CH₃)=CHCH₃; -C(CH₃)CH=CH₂; -CH=CHCH₂CH₂CH₃;-CH₂CH=CHCH₂CH₃; -CH₂CH₂CH=CHCH₃; -CH₂CH₂CH₂CH=CH₂; -C(=CH₂)CH₂CH₂CH₃;-C(CH₃)=CHCH₂CH₃; -CH(CH₃)CH=CHCH; -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, "*alkylaryl*" refers to alkyl-substituted aryl groups and "*substituted alkylaryl*" refers to alkylaryl groups further bearing one or more substituents as set forth above. Further, as used herein "*aralkyl*" means an alkyl group substituted with an aryl radical as defined above: exemplary aralkyl groups include benzyl, 4-methoxybenzyl and phenethyl.

The term "*hetero*" as used herein refers to groups or moieties containing one or more heteroatoms, such as N, O, Si and S. Thus, for example "*heterocyclic*" refers to cyclic groups having, for example, N, O, Si or S as part of the ring structure. "*Heteroalkyl*" and "*heterocycloalkyl*" moieties are alkyl and cycloalkyl groups as defined hereinabove, respectively, containing N, O, Si or S as part of their structure.

As used herein, the term "*catalytic amount*" means a sub-stoichiometric amount of catalyst relative to a reactant, except where expressly stated otherwise.

As employed herein a "*primary amino group*" refers to an NH₂ group that is attached to an organic radical, and a "*secondary amino group*" refers to an NH group that is attached to two organic radicals, which may also together be part of a ring. The term "*tertiary amine*" thus references a nitrogen bearing moiety of which a nitrogen atom is not bound to a hydrogen atom. Where used, the term "*amine hydrogen*" refers to the hydrogen atoms of primary and secondary amino groups.

As used herein, "*anhydrous*" means the relevant composition includes less than 0.25% by weight of water. For example the composition may contain less than 0.1% by weight of water or be completely free of water. The term "*essentially free of solvent*" should be interpreted analogously as meaning the relevant composition comprises less than 0.25% by weight of solvent.

The molecular weights referred to in this specification can be measured with gel permeation chromatography (GPC) using polystyrene calibration standards, such as is done according to ASTM 3536.

Viscosities of the coating compositions described herein are, unless otherwise stipulated, measured using the Brookfield Viscometer at standard conditions of 25°C and 50% Relative Humidity (RH). The method of calibration, the spindle type and rotation speed of the Brookfield Viscometer are chosen according to the instructions of the manufacturer as appropriate for the composition to be measured.

As used herein, "*geltime*" refers to the time required for the mixed components to reach the gel point at 25°C, unless stated otherwise. As used herein, the "*gel point*" is the point where the mixture's storage modulus exceeds its loss modulus.

Unless otherwise stated, the term "*particle size*" refers to the largest axis of the particle. In the case of a generally spherical particle, the largest axis is the diameter.

The term "*mean particle size*" *(D50),* as used herein, refers to a particle size corresponding to 50% of the volume of the sampled particles being greater than and 50% of the volume of the sampled particles being smallerthan the recited D50 value. Similarly, if used, the term "D90" refers to a particle size corresponding to 90% of the volume of the sampled particles being smaller than and 10% of the volume of the sampled particles being greater than the recited D90 value.

All references cited in the present specification are hereby incorporated by reference in their entirety.

### DETAILED DESCRIPTION OF THE INVENTION

### FIRST COMPONENT

### a) i) Partially Acrylated Epoxy Resin

The first component of the composition comprises from 80 to 100 wt.%, based on the weight of the first component of a) i) at least one partially (meth)acrylated epoxy resin. The first component may, for example, comprise from 85 to 100 wt.% or from 90 to 100 wt.% of a) i) said at least one partially (meth)acrylated epoxy resin.

The or each partially (meth)acrylated epoxy resin included in this component should be characterized by at least one and preferably both of the following conditions: the ratio of epoxide groups to (meth)acrylate groups is from 1:1 to 1:3, preferably from 1:1 to 1:2; and, the resin is a liquid having a viscosity in the range from 1000 to 1000000 centipoise (cps), for example from 2500 to 750000 cps as determined at 25°C.

As is known in the art, partially (meth)acrylated epoxy resins a) i) may be obtained through the reaction of a suitable epoxide compound with acrylic acid or methacrylic acid, so that the resins necessarily contain (meth)acryloxy groups at the end of the molecule and β-hydroxyl groups in the main chain of the molecule.

The reactant epoxide compound must possess two or more epoxy groups in its molecule. Without intention to limit the present invention, suitable polyepoxide compounds should be may be liquid and should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be reacted to form component a) i), mention may be made of: glycidyl ethers of polyhydric alcohols and polyhydric phenols; glycidyl esters of polycarboxylic acids; and, epoxidized polyethylenically unsaturated hydrocarbons.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 2,2-dimethyl-1,3-propanediol, 1,6-hexanediol, 1,8-octanediol, 1,12-dodecanediol, cyclopentane diol, cyclohexane diol, cyclohexane dimethanol; resorcinol diglycidyl ether; pyrocatechol diglycidyl ether; hydroquinone diglycidyl ether; bisphenol A based diglycidylethers; hydrogenated bisphenol A based diglycidylethers; bisphenol-A epichlorohydrin based epoxy resins; bisphenol F diglycidyl ethers; hydrogenated bisphenol F based diglycidylethers; 4,4'-dihydroxydiphenylsulfone (bisphenol S) diglycidyl ethers; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; dimer acid diglycidyl esters; diglycidyl o-phthalate; diglycidyl isophthalate; terephthalic acid diglycidyl ester; tetrahydrophthalic acid diglycidyl ester; hexahydrophthalic acid diglycidyl ester; adipic acid diglycidyl ester; butadiene diepoxide; polybutadiene diglycidyl ether; vinylcyclohexene diepoxide; and, limonene diepoxide.

Further exemplary polyepoxide compounds having utility in the present invention include: phenol novolac-type epoxy resins; cresol-novolac-type epoxy resins; diglycidyl ether; glycidyl glycidate; glycerol polyglycidyl ether; bis(2,3-epoxy-2-methylpropyl)ether; trimethylol ethane triglycidyl ether; trimethylolpropane polyglycidyl ether; pentaerythritol polyglycidyl ether; diglycerol polyglycidyl ether; polyglycerol polyglycidyl ether; sorbitol polyglycidyl ether; propoxylated glycerol polyglycidyl ether; polyglycidyl ether of castor oil; epoxidized propylene glycol dioleates; 1,2-tetradecane oxides; and, internally epoxidized 1,3-butadiene homopolymers.

Exemplary commercial polyepoxide compounds which may be used in preparing the partially (meth)acrylated epoxy resins a) i) include but are not limited to: novolac resins, such as resins of the EPIKOTE^{™} and EPON^{™} series available from Hexion and DEN^{™} 438 available from Dow Chemical Company; bisphenol-A epoxy resins, such as DER^{™} 331, and DER^{™} 383; bisphenol-F epoxy resins, such as DER^{™} 354; and, bisphenol-A/F epoxy resin blends, such as DER^{™} 353.

The reaction of the epoxide compound or compounds with acrylic acid or methacrylic acid is desirably performed in bulk but may optionally be performed in a suitable inert solvent, of which mention may be made, for the sake of example, of butyl acetate, toluene, cyclohexane or mixtures thereof. Conventionally, the reaction temperature is in the range from 60 to 150°C with heating being conducted over a period of from 30 minutes to 3 hours: the skilled artisan will however be able to select appropriate heating conditions based in part on the molecular weight of the reactant epoxide compound. The reaction is moreover carried out in the presence of suitable catalyst of which particular mention may be made of: tertiary amines; quaternary ammonium salts such as tetraethylammonium chloride, tetraethylammonium bromide, tetrabutylammonium chloride and tetrabutylammonium bromide; alkali metal hydroxides; alkali metal salts of carboxylic acids; mercaptans; dialkyl sulfides; sulfonium compounds; phosphonium compounds; and, phosphines. The catalytic amount of such compounds may also be determined by the skilled artisan but will typically be in the range of from 0.01 to 5 wt.%, based on the weight of the epoxide compound(s).

In order to prevent undesired polymerization of the partially (meth)acrylated epoxy resins, the above described reaction may be performed in the presence of at least one polymerization inhibitor. Said at least one polymerization inhibitor might typically constitute from 0.0005 to 0.25 wt.% of the total reaction mixture. And exemplary polymerization inhibitors - which may be used alone or in combination - include but are not limited to those described in: EP 1935860 A1; EP 0965619 A; DE 10 201 1 077 248 B1; DE 199 56 509; and, DE 19531649 A1.

The epoxide compound and the (meth)acrylic acid should be reacted in approximately stoichiometric ratios based on the desired degree of (meth)acrylation. Thus herein the reactants should provide from 0.50 to 0.75 equivalents of (meth)acrylic acid per epoxide equivalent. The conversion of the epoxide groups during the reaction should in any event be continuously determined by titration of the epoxide groups in accordance with DIN 16945 *Testing of resins, hardeners and accelerators, and catalyzed resins* (1989-03) and the reaction continued until at least 50% of said epoxide groups have reacted.

The above described reaction aside, it is possible to source the compounds a) i) commercially. Exemplary commercial partially (meth)acrylated epoxy resins include, but are not limited to: 4HBAGE (4-hydroxybutyl (meth)acrylate glycidyl ether) manufactured by Nihon Kasei Co., Ltd.; and the like. In addition, commercially available products of the described above include, but are not limited toEA-1010N, EA-1010LC, EA-1010NT (partially (meth)acrylated bisphenol A type epoxy resins) available from Shin-Nakamura Chemical Co. Ltd.; UVACURE 1561 manufactured by Daicel Allnex; EBECRYL^{®} resins such as EBECRYL^{®} 600, 605, 608, 3700, 3701, 3701-20T, 3708, 3720, 3720-HD20, 3720-TM20, 3720-TM40, 3720-TP25, 3720-TP40, 3605 and 3730-TP20 available from UCB Radcure Inc.; and, ENA or ENC (partially (meth)acrylated novolac epoxy resins) available from Kagawa Chemical Co. Ltd.

### a) ii) Further Ingredients

The first component of the two (2K) component composition may optionally comprise - in an amount up to 20 wt.%, based on the weight of said first component - supplementary epoxide compounds to those defined above as compounds a) i). Said supplementary epoxide compounds a) ii) may, for example, constitute from 0 to 15 wt.%, preferably from 0 to 10 wt.% and more preferably from 0 to 5 wt.% of the first component of the composition.

Epoxy resins as used herein may include mono-functional epoxy resins, multi- or poly-functional epoxy resins, and combinations thereof. The epoxy resins may be pure compounds but equally may be mixtures epoxy functional compounds, including mixtures of compounds having different numbers of epoxy groups per molecule. An epoxy resin may be saturated or unsaturated, aliphatic, cycloaliphatic, aromatic or heterocyclic and may be substituted. Further, the epoxy resin may also be monomeric or polymeric.

Without intention to limit the present invention, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an important embodiment, the monoepoxide compound conforms to Formula (III) herein below: 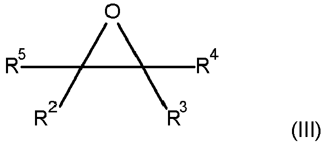 wherein: R², R³, R⁴ and R⁵ may be the same or different and are independently selected from hydrogen, a halogen atom, a C₁-C₈ alkyl group, a C₃ to C₁₀ cycloalkyl group, a C₂-C₁₂ alkenyl, a C₆-C₁₈ aryl group or a C₇-C₁₈ aralkyl group, with the proviso that at least one of R³ and R⁴ is not hydrogen.

It is preferred that R², R³ and R⁵ are hydrogen and R⁴ is either a phenyl group or a C₁-C₈ alkyl group and, more preferably, a C₁-C₄ alkyl group.

Having regard to this embodiment, exemplary monoepoxides include: ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

In the present invention, reference is made to using at least one monoepoxide compound selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and, cyclododecene oxide.

Again, without intention to limit the present invention, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be polymerized in the present invention, mention may be made of: glycidyl ethers of polyhydric alcohols and polyhydric phenols; glycidyl esters of polycarboxylic acids; and, epoxidized polyethylenically unsaturated hydrocarbons.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 2,2-dimethyl-1,3-propanediol, 1,6-hexanediol, 1,8-octanediol, 1,12-dodecanediol, cyclopentane diol, cyclohexane diol, cyclohexane dimethanol; resorcinol diglycidyl ether; pyrocatechol diglycidyl ether; hydroquinone diglycidyl ether; bisphenol A based diglycidylethers; bisphenol-A epichlorohydrin based epoxy resins; bisphenol F diglycidyl ethers; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; dimer acid diglycidyl esters; diglycidyl o-phthalate; diglycidyl isophthalate; terephthalic acid diglycidyl ester; tetrahydrophthalic acid diglycidyl ester; hexahydrophthalic acid diglycidyl ester; adipic acid diglycidyl ester; butadiene diepoxide; polybutadiene diglycidyl ether; vinylcyclohexene diepoxide; and, limonene diepoxide.

Further exemplary polyepoxide compounds having utility in the present invention include: diglycidyl ether; glycidyl glycidate; glycerol polyglycidyl ether; bis(2,3-epoxy-2-methylpropyl)ether; trimethylol ethane triglycidyl ether; trimethylolpropane polyglycidyl ether; pentaerythritol polyglycidyl ether; diglycerol polyglycidyl ether; polyglycerol polyglycidyl ether; sorbitol polyglycidyl ether; propoxylated glycerol polyglycidyl ether; polyglycidyl ether of castor oil; epoxidized propylene glycol dioleates; 1,2-tetradecane oxides; and, internally epoxidized 1,3-butadiene homopolymers.

And examples of highly preferred polyepoxide compounds include: flexibilizing epoxy resins available as Heloxy^{™} Modifier Numbers 32, 44, 56, 67, 68, 69, 71, 84, 107, and 505 available from Shell Chemical Company; epoxy novolac resins, such as resins of the EPIKOTE^{™} and EPON^{™} series available from Hexion and DEN^{™} 438 available from Dow Chemical Company; bisphenol-A epoxy resins, such as DER^{™} 331, and DER^{™} 383; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; castor oil triglycidyl ether, such as ERISYS^{™} GE-35H; polyglycerol-3-polyglycidyl ether, such as ERISYS^{™} GE-38; sorbitol glycidyl ether, such as ERISYS^{™} GE-60; and, Poly BD 600, Poly BD 650, Vikoflex^{™} 4050 and Vikoflex^{™} 5075 available from EIf Atochem.

The above aside, the composition can in certain embodiments comprise glycidoxy alkyl alkoxy silanes having the formula: 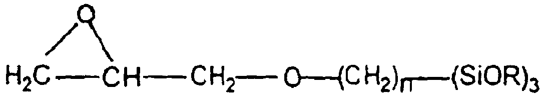 wherein: each R is independently selected from methyl or ethyl; and, n is from 1-10.

Exemplary epoxide functional silanes include but are not limited to: γ-glycidoxy propyl trimethoxy silane, γ-glycidoxy ethyl trimethoxy silane, γ-glycidoxy methyl trimethoxy silane, γ-glycidoxy methyl triethoxy silane, γ-glycidoxy ethyl triethoxy silane, γ-glycidoxy propyl triethoxy silane; and, 8-glycidooxyoctyl trimethoxysilane. When present, the epoxide functional silanes should constitute less than 10 wt.%, preferably less than 5 wt.% or less than 2 wt.%, based on the total weight of the epoxide compounds.

Based on the above compositional ranges, it is evident that the first component of the composition may either consist independently of adducts a) i) or consist of a combination of adducts a) i) and epoxide compounds a) ii). However, in certain embodiments, further resinous and / or adjunct ingredients may be present in the first component provided the above defined compositional ranges for parts a)i) and a)ii) remain satisfied. In this regard, the present invention does not preclude the first component of the curable compositions from further comprising one or more cyclic monomers selected from the group consisting of: oxetanes; cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic comonomers should constitute less than 10 wt.%, preferably less than 7.5 wt.% or less than 5 wt.%, based on the total weight of the epoxide functional compounds in the first component.

### SECOND COMPONENT

The curative component comprises b) at least one polyamine having at least two amine hydrogen atoms reactive toward epoxide groups. The at least one polyamine having at least two amine hydrogen atoms reactive toward epoxide groups should, in particular, contain primary and / or secondary amine groups and have an amine hydrogen equivalent weight of not more than 150 g/eq., preferably not more than 125 g/eq and more preferably not more than 100 g/eq.

Suitable polyamines, which may be used alone or in combination, include but are not limited to the following:
i) Aliphatic, cycloaliphatic or arylaliphatic primary diamines of which the following examples may be mentioned: 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo[5.2.1.0^{2,6}]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro[5.5]undecane; and, 1,3-bis(aminomethyl)benzene (MXDA).
ii) Tertiary amine group-containing polyamines with two or three primary aliphatic amine groups of which the following specific examples may be mentioned: N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)cyclohexylamine; N,N-bis(3-aminopropyl)-2-ethyl-hexylamine; tris(2-aminoethyl)amine; tris(2-aminopropyl)amine; tris(3-aminopropyl)amine; and, the products from the double cyanoethylation and subsequent reduction of fatty amines derived from natural fatty acids, such as N,N-bis(3-aminopropyl)dodecylamine and N,N-bis(3-aminopropyl)tallow alkylamine, commercially available as Triameen^{®} Y12D and Triameen^{®} YT (from Akzo Nobel).
iii) Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine^{®} RFD-270 (from Huntsman); polyoxyalkylenedi- or-triamines obtainable as products from the amination of polyoxyalkylenedi- and -triols and which are commercially available under the name of Jeffamine^{®} (from Huntsman), under the name of polyetheramine (from BASF) or under the name of PC Amines^{®} (from Nitroil). A particular preference may be noted for the use of Jeffamine^{®} D-230, Jeffamine^{®} D-400, Jeffamine^{®} D-600, Jeffamine^{®} D-2000, Jeffamine^{®} D-4000, Jeffamine^{®} T-403, Jeffamine^{®} T-3000, Jeffamine^{®} T-5000, Jeffamine^{®} EDR-104, Jeffamine^{®} EDR-148 and Jeffamine^{®} EDR-176, as well as corresponding amines from BASF or Nitroil.
iv) Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine," HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1 ,5-pentanediamine or N,N'-bis(3-amino-1-ethylpropyl)-2-methyl-1,5-pentanediamine.
v) Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-cyclohexyl-1,2-ethanediamine; 4-aminomethyl-piperidine; N-(2-aminoethyl)piperazine (N-AEP); N-methyl-1,3-propanediamine; N-butyl-1,3-propanediamine; N-(2-ethylhexyl)-1,3-propanediamine; N-cyclohexyl-1,3-propanediamine; 3-methylamino-1-pentylamine; 3-ethylamino-1-pentylamine; 3-cyclohexylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine^{®} 240 (from Mitsubishi Gas Chemical).
vi) Secondary diamines and, in particular, N,N'-dialkylation products of the previously mentioned polyamines with two primary amine groups, especially N,N'-dialkylation products of 1,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.
vii) Aromatic polyamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure^{®} 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink^{®} from Air Products); 1,2-bis(2-aminophenylthio)ethane, 2-methylpropyl-(4-chloro-3,5-diaminobenzoate); and, tert.butyl-(4-chloro-3,5-diaminobenzoate).
viii) Polyamidoamines of which indicative members include the reaction products of monohydric or polyhydric carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and, Beckopox^{®} EH 651, EH 654, EH 655, EH 661 and EH 663 (from Cytec).

Preferred among the aforementioned polyamines having at least two primary aliphatic amine groups are: isophorone diamine (IPDA); hexamethylene diamine (HMDA); 1,3-bis(aminomethyl)cyclohexane; 1,4-bis(aminomethyl)cyclohexane; bis(4-amino-cyclohexyl)methane; bis(4-amino-3-methylcyclohexyl)methane; NBDA; and, ether group-containing polyamines with a number average molecular weight (Mn) of up to 500 g/mol. Particularly preferred among said ether group-containing polyamines are Jeffamine^{®} D-230 and D-600 (available from Huntsman). Preferred among the aforementioned polyamines with having one primary and at least one secondary amino group are 4-aminomethyl-piperidine and N-(2-aminoethyl)piperazine (N-AEP).

When formulating the curable composition, it should *in toto* be characterized by a ratio of:
the active hydrogen equivalent of said at least one polyamine (b); to
the total equivalent of epoxy groups and acrylate groups of said first component (a) of from 0.5: 1 to 1.05: 1, for example from 0.8: 1 to 1.0: 1.

### Additives and Adjunct Ingredients

Said compositions obtained in the present invention will typically further comprise adjuvants and additives that can impart improved properties to these compositions. For instance, the adjuvants and additives may impart one or more of: improved elastic properties; improved elastic recovery; faster curing time; and, lower residual tack. Included among such adjuvants and additives - which independently of one another may be included in single components or both components of a two (2K) component composition - are catalysts, plasticizers, stabilizers including UV stabilizers, antioxidants, tougheners, fillers, reactive diluents, drying agents, adhesion promoters, fungicides, flame retardants, rheological adjuvants, color pigments or color pastes, and/or optionally also, to a small extent, non-reactive diluents.

For completeness, it is noted that in general adjunct materials and additives which contain epoxide-reactive groups will be blended into the second, hardener component of the two (2K) component composition. Materials that contain epoxide groups or which are reactive with the hardener(s) are generally formulated into the first, epoxide-containing component of the two (2K) component composition. Unreactive materials may be formulated into either or both of the first and second components.

Suitable catalysts are substances that, when present in a catalytic amount, promote the reaction between the epoxide groups and the amine groups. Without intention to the limit the catalysts used in the present invention, mention may be made of the following suitable catalysts: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids and acid esters; ii) tertiary amines, such as 1,4-diazabicyclo[2.2.2]octane, benzyldimethylamine, α-methylbenzyl dimethylamine, triethanolamine, dimethylamino propylamine, imidazoles - including N-methylimidazole, N-vinylimidazole and 1,2-dimethylimidazole - and salts of such tertiary amines; iii) quaternary ammonium salts, such as benzyltrimethyl ammonium chloride; iv) amidines, such as 1,8-diazabicyclo[5.4.0]undec-7-ene; v) guanidines, such as 1,1,3,3-tetramethylguanidine; vi) phenols, in particular bisphenols; vii) phenol resins; viii) Mannich bases; and, ix) phosphites, such as di- and triphenylphosphites.

A "*plasticizer*" for the purposes of this invention is a substance that decreases the viscosity of the composition and thus facilitates its processability. Herein the plasticizer may constitute up to 10 wt.% or up to 5 wt.%, based on the total weight of the composition, and is preferably selected from the group consisting of: polydimethylsiloxanes (PDMS); diurethanes; ethers of monofunctional, linear or branched C4-C16 alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; epoxidized plasticizers; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential. It is preferred that the plasticizer comprises or consists of one or more polydimethylsiloxane (PDMS).

"*Stabilizers*" for purposes of this invention are to be understood as antioxidants, UV stabilizers or hydrolysis stabilizers. Herein stabilizers may constitute *in toto* up to 10 wt.% or up to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Those compositions of the present invention may optionally contain a toughening rubber in the form of in the form of core-shell particles dispersed in the epoxy resin matrix. The term "*core shell rubber*" or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0°C and preferably a glass transition temperature (T_{g}) of -20°C or lower, more preferably -40°C or lower and even more preferably -60°C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have an average particle size (d50) of from 10nm to 300nm, for example from 50 nm to 200 nm: said particle size refers to the diameter or largest dimension of a particle in a distribution of particles and is measured via dynamic light scattering.

The present application does not preclude the presence of two types of core shell rubber (CSR) particles with different particle sizes in the composition to provide a balance of key properties of the resultant cured product, including shear strength, peel strength and resin fracture toughness. In this embodiment, smaller included particles (1^{st} CSR type) may have an average particle size of from 10 to 100 nm and larger included particles (2^{nd} CSR type) may have an average particle size of from 120 nm to 300 nm, for example from 150 to 300 nm. The smaller core shell rubber particles should typically be employed in excess of the larger particles on a weight basis: a weight ratio of smaller CSR particles to larger CSR particles of from 3:1 to 5:1 may be employed for instance.

The core-shell rubber may be selected from commercially available products, examples of which include: Paraloid EXL 2650A, EXL 2655 and EXL2691 A, available from The Dow Chemical Company; the Kane Ace^{®} MX series available from Kaneka Corporation, and in particular MX 120, MX 125, MX 130, MX 136, MX 551, MX553; and, METABLEN SX-006 available from Mitsubishi Rayon.

The core shell rubber particles should be included in the composition in an amount of from 0 to 10 wt.%, for example from 0 to 5 wt.% based on the total weight of the composition.

As noted, the compositions according to the present invention can additionally contain fillers. Suitable here are, for example, chalk, lime powder, precipitated and/or pyrogenic silicic acid, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler.

The pyrogenic and/or precipitated silicic acids advantageously have a BET surface area from 10 to 90 m²/g. When they are used, they do not cause any additional increase in the viscosity of the composition according to the present invention, but do contribute to strengthening the cured composition.

It is likewise conceivable to use pyrogenic and/or precipitated silicic acids having a higher BET surface area, advantageously from 100 to 250 m²/g, in particular from 110 to 170 m²/g, as a filler: because of the greater BET surface area, the effect of strengthening the cured composition is achieved with a smaller proportion by weight of silicic acid.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics such as PVC.

The total amount of fillers present in the compositions of the present invention will preferably be from 0 to 30 wt.%, and more preferably from 0 to 20 wt.%, based on the total weight of the composition. The desired viscosity of the curable composition will typically be determinative of the total amount of filler added and it is submitted that in order to be readily extrudable out of a suitable dispensing apparatus - such as a tube - the curable compositions should possess a viscosity of from 3000 to 1000000 mPa.s, preferably from 5000 to 250000 mPas.

It is noted that compounds having metal chelating properties may be used in the compositions of the present invention to help enhance the adhesion of the cured adhesive to a substrate surface. Further, also suitable for use as adhesion promoters are the acetoacetate-functionalized modifying resins sold by King Industries under the trade name K-FLEX XM-B301.

Examples of suitable pigments are titanium dioxide, iron oxides, or carbon black.

In order to enhance shelf life even further, it is often advisable to further stabilize the compositions of the present invention with respect to moisture penetration through using drying agents. A need also occasionally exists to lower the viscosity of an adhesive or sealant composition according to the present invention for specific applications, by using reactive diluent(s). The total amount of reactive diluents present will typically be up to 15 wt.%, and preferably from 1 to 5 wt.%, based on the total weight of the composition.

The presence of solvents and non-reactive diluents in the compositions of the present invention is also not precluded where this can usefully moderate the viscosities thereof. For instance, but for illustration only, the compositions may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said solvents and non-reactive diluents constitute *in toto* less than 10 wt.%, in particular less than 5 wt.% or less than 2 wt.%, based on the total weight of the composition.

### Illustrative Embodiment of the Two Component Composition

In an exemplary embodiment of the present invention, the two component (2K) composition comprises:
a first component comprising, based on the weight of the component:
   from 80 to 100 wt.% of a) i) at least one partially (meth)acrylated resin selected from the group consisting of bisphenol A based diglycidylethers hydrogenated bisphenol A based diglycidylethers bisphenol-A epichlorohydrin based epoxy resins, bisphenol F diglycidyl ethers and hydrogenated bisphenol F based diglycidylethers, wherein the ratio of epoxide groups to (meth)acrylate groups in the or each partially (meth)acrylated epoxy resin a) i) is from 1:1 to 1:2; and,
   from 0 to 20 wt.% of a) ii) at least one epoxy resin distinct from said resin a) i); and,
a second component consisting of b) at least one polyamine having at least two amine hydrogens reactive toward epoxide groups,
wherein said curable composition is characterized by a ratio of the amine hydrogen equivalent of said at least one polyamine (b) to the total equivalents of epoxy groups and acrylate groups of said first component of from 0.8: 1 to 1.0: 1.

This exemplary embodiment of the composition has been demonstrated to have a fast gel time of less than 5 minutes, as determined at 25°C.

### METHODS AND APPLICATIONS

For the two component (2K) curable compositions, the reactive components are brought together and mixed in such a manner as to induce the hardening thereof: the reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale liner applications in which volumes of less than 2 liters will generally be used, the preferred packaging for the two component (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two components of the composition may advantageously be stored in drums or pails: in this case the two components are extruded via hydraulic presses, in particular by way of follower plates, and are supplied via pipelines to a mixing apparatus which can ensure fine and highly homogeneous mixing of the hardener and binder components. In any event, for any package it is important that the first component be disposed within an airtight and moisture-tight seal, so that both components can be stored for a long time, ideally for 12 months or longer.

Non-limiting examples of two component dispensing apparatuses and methods that may be suitable for the present invention include those described in U.S. Patent No. 6,129,244 and US Patent No. 8,313,006.

The two (2K) component curable compositions should broadly be formulated to exhibit an initial viscosity - determined immediately after mixing, for example, up to two minutes after mixing - of less than 1000000 mPa·s, for instance less than 500000 mPa.s, at 25°C. Independently of or additional to said viscosity characteristics, the two (2K) component composition should be formulated to be bubble (foam) free upon mixing and subsequent curing.

The curing of the compositions of the invention can occur at temperatures in the range of from -10°C to 120°C, preferably from 0°C to 70°C, and in particular from 20°C to 60°C. The temperature that is suitable depends on the specific compounds present and the desired curing rate and can be determined in the individual case by the skilled artisan, using simple preliminary tests if necessary. Of course, curing at temperatures of from 10°C to 35°C or from 20°C to 30°C is especially advantageous as it obviates the requirement to substantially heat or cool the mixture from the usually prevailing ambient temperature. Where applicable, however, the temperature of the mixture formed from the respective components of a two (2K) component composition may be raised above the mixing temperature and / or the application temperature using conventional means including microwave induction.

The curable compositions according to the invention may find utility *inter alia* in: varnishes; inks; binding agents for fibers and / or particles; the coating of glass; the coating, sealing and adhesion of mineral building materials, such as lime- and / or cement-bonded plasters, gypsum-containing surfaces, fiber cement building materials and concrete; the coating, sealing and adhesion of wood and wooden materials, such as chipboard, fiber board and paper; the coating of metallic surfaces; the coating of asphalt- and bitumen-containing pavements; the coating, sealing and adhesion of various plastic surfaces; and, the coating of leather and textiles.

In a particularly preferred embodiment, the composition of the present invention is applied to substrates to produce an adherent, highly abrasion resistant coating. The bonding operation can often be effected a room temperature and effective abrasion resistance can be attained after curing. Moreover, when bonding to the surface of mechanical structures or to a floor or pavement, the coating compositions can provide corrosion protection for the surface and can prevent the surface from being contacted with compounds which would be deleterious to the operation or efficiency of the specific structure.

In each of the above described applications, the compositions may applied by conventional application methods such as: brushing; roll coating using, for example, a 4-application roll equipment where the composition is solvent-free or a 2-application roll equipment for solvent-containing compositions; doctor-blade application; printing methods; and, spraying methods, including but not limited to air-atomized spray, air-assisted spray, airless spray and high-volume low-pressure spray. For coating and adhesive applications, it is recommended that the compositions be applied to a wet film thickness of from 10 to 500 µm. The application of thinner layers within this range is more economical and provides for a reduced likelihood of thick cured regions that may - for coating applications - require sanding. However, great control must be exercised in applying thinner coatings or layers so as to avoid the formation of discontinuous cured films.

For completeness, it is noted that the present invention does not preclude the preparation of epoxy adhesives in the form of "*film adhesive*"*.* A pre-polymer mixture of epoxy resins, hardener, and other desired components is applied as a coating onto a polymer film substrate, rolled up and stored at a sufficiently low temperature to inhibit the chemical reactions between the components. When needed, the film adhesive is removed from the low temperature environment and applied to a metal or composite part, the backing is stripped off and the assembly completed and cured in an oven or autoclave.

Various features and embodiments of the disclosure are described in the following examples, which are intended to be representative and not limiting.

### EXAMPLES

The following commercial products were used in the Examples:

| | |
|---|---|
| HCT-1: | 50% acrylated bisphenol A epoxy resin (CAS No. 55127-80-5, Oxirane, 2,2'-((1-methylethylidene)bis(4,1-phenyleneoxymethylene))bis-, homopolymer, di-2-propenoate) available from Kagawa Chemical Co., Ltd. |
| Uvacure 1561: | 50% acrylated bisphenol A epoxy resin (CAS No. 55127-80-5, Oxirane, 2,2'-((1-methylethylidene)bis(4,1-phenyleneoxymethylene))bis-, homopolymer, di-2-propenoate) available from Daicel Allnex Ltd. |
| JER 828: | Bisphenol A epoxy resin, available from Mitsubishi Chemical. |
| Ancamine 2678: | Amine curative (AHEW 30g/eq.) available from Evonik Corporation. |
| N-AEP: | N-(2-Aminoethyl)piperazine (AHEW 43 g/eq.) available from Nouryon. |

The above described ingredients were used to prepare the six formulations given in Table 1 below. The weight percentage given in that Table is based on the total weight of the composition.

**Table 1**

| **Ingredients** | | **Example 1 (wt.%)** | **Example 2 (wt.%)** | **Comparative Example 1 (wt.%)** | **Exampl e3 (wt.%)** | **Example 4 (wt.%)** | **Comparative Example 2 (wt.%)** |
|---|---|---|---|---|---|---|---|
| First Component | HCT-1 | 88 | | | 82 | | |
| | Uvacure 1561 | | 88 | | | 82 | |
| | JER828 | | | 86 | | | 81 |
| Second Component | Ancamine 2678 | 12 | 12 | 14 | | | |
| | N-AEP | | | | 18 | 18 | 19 |

The following test method was then used to characterize the two-component formulations:
Gel Time Test Method: 10g in total of the first, resinous component and the second component with respective ratio were weighted into a disposable beaker and thoroughly mixed to start the measurement of the gel time. Gel times were measured at 25 °C according to ASTM D 2471, standard test method for gel time of thermosetting resins. The results are shown in table 2.

**Table 2**

| **Tested Condition** | **Example 1 (wt.%)** | **Example 2 (wt.%)** | **Comparative Example 1 (wt.%)** | **Example 3 (wt.%)** | **Example 4 (wt.%)** | **Comparative Example 2 (wt.%)** |
|---|---|---|---|---|---|---|
| Gel Time (minutes) | 2 | 2 | 60 | 3 | 3 | 34 |

As illustrated, the two-component compositions in accordance with the present invention are characterized by a gel time at 25 °C of less than 5 minutes.

In view of the foregoing description and examples, it will be apparent to those skilled in the art that equivalent modifications thereof can be made without departing from the scope of the appended claims.

## Claims

1. A two-component (2K) curable composition comprising:
a first component comprising, based on the weight of the component:
from 80 to 100 wt.% of a) i) at least one partially (meth)acrylated epoxy resin; and,
from 0 to 20 wt.% of a) ii) at least one epoxy resin distinct from said resin a) i); and,
a second component comprising b) at least one polyamine having at least two amine hydrogens reactive toward epoxide groups,
wherein said curable composition is **characterized by** a ratio of the amine hydrogen equivalent of said at least one polyamine (b) to the total equivalents of epoxy groups and acrylate groups of said first component (a) of from 0.5: 1 to 1.05: 1.

2. The two-component (2K) curable composition according to claim 1, wherein said first component comprises, based on the weight of the component:
from 85 to 100 wt.% of a) i) at least one partially (meth)acrylated epoxy resin; and,
from 0 to 15 wt.% of a) ii) at least one epoxy resin distinct from said resin a) i).

3. The two-component (2K) curable composition according to claim 1, wherein said first component comprises, based on the weight of the component:
from 90 to 100 wt.% of a) i) at least one partially (meth)acrylated epoxy resin; and,
from 0 to 10 wt.% of a) ii) at least one epoxy resin distinct from said resin a) i).

4. The two-component (2K) curable composition according to any one of claims 1 to 3, wherein the ratio of epoxide groups to (meth)acrylate groups in the or each partially (meth)acrylated epoxy resin is from 1:1 to 1:3.

5. The two-component (2K) curable composition according to claim 4, wherein the ratio of epoxide groups to (meth)acrylate groups in the or each partially (meth)acrylated epoxy resin from 1:1 to 1:2.

6. The two-component (2K) composition according to any one of claims 1 to 5, wherein the or each partially (meth)acrylated epoxy resin is a liquid having a viscosity in the range from 1000 to 1000000 centipoise (cps), preferably from 2500 to 750000 cps as determined at 25°C.

7. The two-component (2K) composition according to any one of claims 1 to 6, wherein said part a) i) comprises at least one partially (meth)acrylated resin selected from diepoxide compounds having epoxide equivalent weights of less than 500 g/eq.

8. The two-component (2K) composition according to any one of claims 1 to 7, wherein said part a) i) comprises at least one partially (meth)acrylated resin selected from the group consisting of: bisphenol A based diglycidylethers; hydrogenated bisphenol A based diglycidylethers; bisphenol-A epichlorohydrin based epoxy resins; bisphenol F diglycidyl ethers; and, hydrogenated bisphenol F based diglycidylethers.

9. The two-component (2K) composition according to any one of claims 1 to 8, wherein said at least one polyamine has an amine hydrogen equivalent weight of not more than 150 g/eq.

10. The two-component (2K) composition according to any one of claims 1 to 9, wherein said at least one polyamine has one primary and at least one secondary amino group.

11. The two-component (2K) curable composition according to any one of claims 1 to 10, wherein the composition consists of:
a first component comprising, based on the weight of the component:
from 80 to 100 wt.% of a) i) at least one partially (meth)acrylated epoxy resin; and,
from 0 to 20 wt.% of a) ii) at least one epoxy resin distinct from said resin a) i); and,
a second component consisting of b) at least one polyamine having at least two amine hydrogens reactive toward epoxide groups,
wherein said curable composition is **characterized by** a ratio of the amine hydrogen equivalent of said at least one polyamine (b) to the total equivalents of epoxy groups and acrylate groups of said first component (a) of from 0.5: 1 to 1.05: 1.

12. The two-component (2K) curable composition according to any one of claims 1 to 11, **characterized by** a ratio of the amine hydrogen equivalent of said at least one polyamine (b) to the total equivalents of epoxy groups and acrylate groups of said first component (a) of from 0.8: 1 to 1.0: 1.

13. A cured product obtained from the two component (2K) composition as defined in any one of claims 1 to 12.

14. Use of the cured reaction product as defined in claim 13 as a coating, adhesive or sealant.
